Europäisches Patentamt

(19) **European Patent Office**

**Office européen des brevets**

(11) Publication number: **0 009 293**

**A1**

(12) # EUROPEAN PATENT APPLICATION

(21) Application number: **79200527.4**

(22) Date of filing: **20.09.79**

(51) Int. Cl.³: **H 04 M 1/70**

(30) Priority: **21.09.78 NL 7809628**

(71) Applicant: **Staat der Nederlanden (Staatsbedrijf der Posterijen, Telegrafie en Telefonie), P.O. Box 430, NL-2260-AK Leidschendam (NL)**

(43) Date of publication of application: **02.04.80 Bulletin 80/7**

(72) Inventor: **De Bode, Johannes, 5 Sweelinckhof, NL-2742 CA Waddinxveen (NL)**
Inventor: **De Lange, Arie, 25 Hendrik Zwaardecroonstraat, NL-2593 XK The Hague (NL)**
Inventor: **Van Leeuwen, Wilhelmus Antonius, 30 Heliotrooplaan, NL-2555 MB The Hague (NL)**
Inventor: **Van Noort, Hendrik, 2 Akeleistraat, NI-2803 SP Gouda (NL)**
Inventor: **De Raad, Andries Adrianus, 86 Gravenstein, NL-2411 GN Bodegraven (NL)**

(84) Designated Contracting States: **BE CH DE FR GB SE**

(54) **Circuit for connecting, at one time, only one of a number of telephone sets to a subscriber's line.**

(57) Circuit which can be incorporated in a telephone set or the like to prevent that more than one of a number of telephone sets, which are multiple-connected to a subscriber's line, get into the conversation or signalling state. The circuit comprises a supply circuit, such as a rectifier bridge circuit, switching means for switching through the telephone set to the subscriber's line and a control circuit for controlling the switching means. To keep the voltage drop across the circuit as small as possible the switching means (9) can be incorporated in the supply circuit.

- 1 -

Circuit for connecting, at one time, only one of a number of telephone
sets to a subscriber's line.

The invention comprises a circuit allowing only one of a number of
telephone sets, which are multiple-connected to a subscriber's line, to
get, at one time, into the conversation or signalling state, and comprising in each of the telephone sets:

- a supply circuit for the equipment in the telephone set or
coupled to it;
- switching means for switching the equipment that follows into
the conversation or signalling state, and
- a control circuit for controlling the switching means dependent on the voltage across the subscriber's line.

A circuit of this type is known from the American patent specification 3,499,121.

Similar circuits are utilized when two or more subscriber's stations
make use of only one subscriber's line, in which case the subscriber's
stations have to exclude one another.

Present-day electromechanical and electronic telephone exchanges
have a comparatively high voltage drop after the connection between the
telephone exchange and the subscriber's station has been established. On
the one hand subscriber's stations have therefore to come up to the requirement that they can work at a relatively low voltage. On the other hand there is a growing tendency to manufacture telephone sets with incorporated amplifiers, for which a sufficient voltage will have to remain.
In order to come up to the said requirements the present circuit must have
the lowest possible voltage drop.

A drawback of the known circuit is that at least three components,
to wit two diodes and one thyristor, are connected in series between the
subscriber's line and the circuit that follows.

According to the invention the voltage drop occurring across the said
three components is reduced because the supply circuit and the switching
means have at least one semiconductor element in common. In consequence of
this the said series connection can be reduced from three to two semiconductor elements, as a result of which a lower voltage drop is obtained
across the circuit meant.

The invention will now be further elucidated with the help of the
drawing in which

Fig. 1 represents a circuit of telephone sets according to the
invention;

Fig. 2 represents an embodiment of a supply circuit with a controlled semiconductor;

Fig. 3 represents an embodiment of a supply circuit with two
controlled semiconductors;

Fig. 4 represents an embodiment of a control circuit for a line
of unknown polarity;

Fig. 5 represents an embodiment of a control circuit for checking
a voltage of known polarity, and

Fig. 6 represents a preferred embodiment of a combination of a
supply circuit and a control circuit.

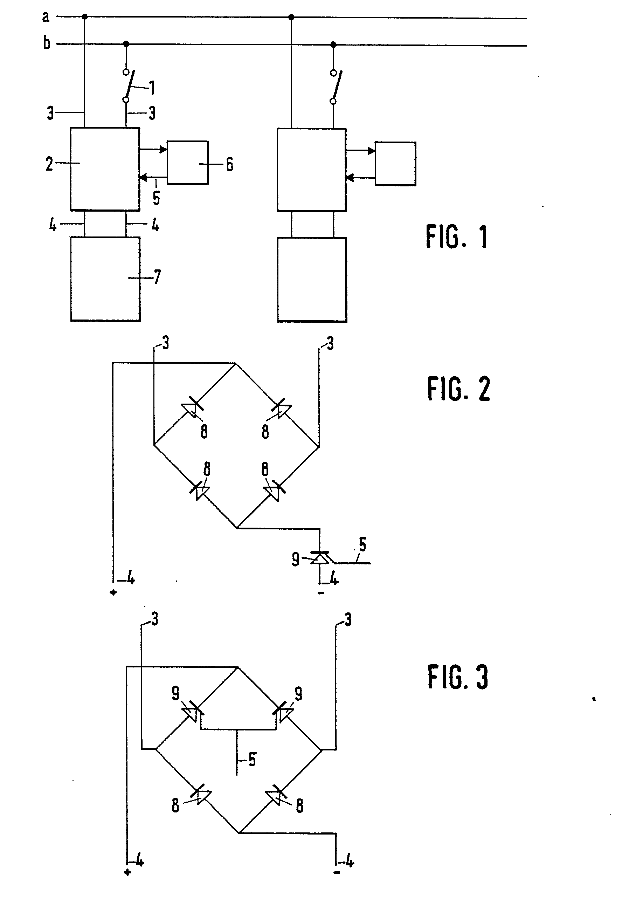

Fig. 1 shows a telephone line a-b to which two identical telephone
sets are connected according to the invention. Each of the telephone sets
has a switch hook contact 1 and a supply circuit 2, which is connected to
the line via the outputs 3 and which is provided with the outputs 4. The
function of the supply circuit comprises:

a. in case the polarity of the voltage is unknown, to pass a
voltage of fixed polarity to the subscriber's station equipment;

b.  transmitting speech and signals from and to the equipment
that follows.

For briefness' sake this function will be indicated by "supplying" in what follows. The supply circuit 2 can be controlled via a control input 5 by means of a control circuit 6. The equipment 7, which follows and which can comprise amplifiers for the listening and speaking circuit, a key-set code transmitter and a key-set code receiver, is supplied via the outputs 4. The equipment 7, which follows, is not of vital importance for the invention, and will therefore not be described. It is remarked, however, that the equipment 7 after having been switched on must have a sufficiently low internal resistance to cause a sufficient voltage drop across the subscriber's line, the impedance of the equipment remaining unaltered.

When the switch hook contact 1 of all the telephone sets connected to the a-b line is open, the voltage between the a-wire and the b-wire amounts to 48-60 V. When the switch hook contact 1 is closed, the voltage across the a-b line considerably drops. The voltage drop depends on the internal resistance of the telephone exchange to which the a-b line is connected, on the resistance of the line and on the aforesaid behaviour of the equipment 7.

For the exchanges known in the Netherlands the voltage will always drop to e.g. 28 V or less after the switch hook contact 1 has been closed and the supply circuit 2 has been switched on. Now, when dimensioning the control circuit 6 in such a way that it only reacts to a voltage higher than 28 V, the control circuit 6 will only be able to energize the supply circuit 2 of only one telephone set at a time. In consequence of this the access to the a-b line is closed for all the remaining equipment as far as it is provided with the said supply circuit.

Fig. 2 and Fig. 3 represent embodiments of the supply circuit 2. In these figures semiconductors conducting in one direction, such as diodes, are indicated by 8, and a controllable semiconductor, such as a thyristor, is indicated by 9. If the polarity of the a-b line is known, one controllable semiconductor will of course suffice. The use of a thyristor is attractive because this type of semiconductor remains conducting after a non-recurring start pulse at the control input 5. The controllable semi-

- 4 -

conductor 9 returns to the non-conducting state when the switch hook contact 1 opens.

Two semiconductors 8 can be replaced with advantage by semiconductors with a Zener characteristic to protect the equipment which follows against large voltage peaks, which can be caused for example by lightning.

Fig. 2 represents a circuit which is economically more attractive because it needs only one controllable semiconductor 9. On the other hand the supply circuit comprises three semiconductors connected in series so that a relatively large voltage drop presents itself. The circuit according to Fig. 3 does not know this drawback, but due to the more expensive components this circuit is economically less attractive.

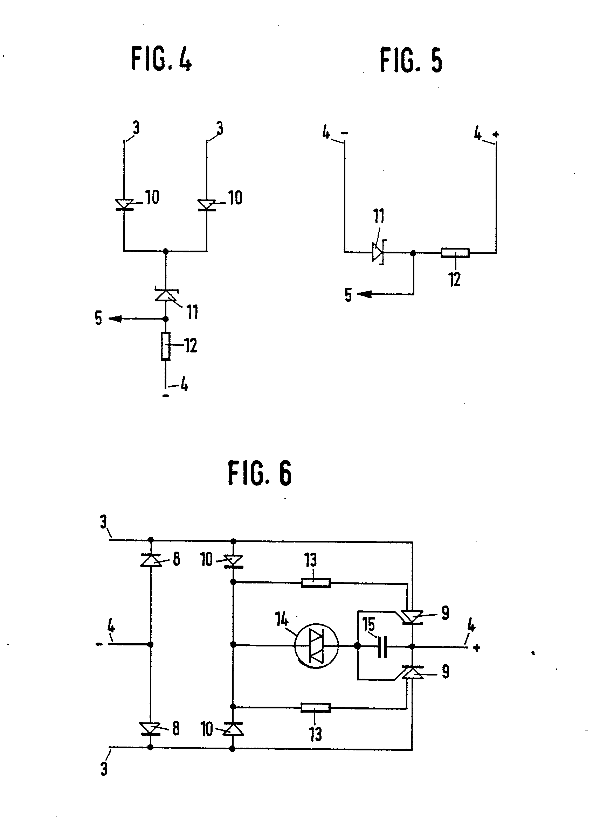

Figs. 4 and 5 represent embodiments for the control circuit 6. In these figures 10 indicates diodes, a Zener diode which reacts to a voltage of about 28 V and higher is indicated by 11, and 12 indicates a resistor which serves to restrict the current through the Zener diode 11 and also to obtain a sufficient voltage drop to control the thyristor 9.

The circuit according to Fig. 4 is particularly suited to supervise a voltage of unknown polarity.

The circuit according to Fig. 5 can only supervise a supply voltage of known polarity. The working of both circuits is self-evident.

Fig. 6, finally, shows a preferred embodiment of a combination of the supply circuit 2 and the control circuit 6. The supply circuit is here formed by the two diodes or Zener diodes 8 and the two thyristor tetrodes 9. An advantage of the semiconductors of this type is that they need only a very weak current to remain "open". The remaining components form the control circuit. The resistors 13 have been incorporated to restrict the sensitivity to disturbing voltages. Moreover, the circuit according to Fig. 6 comprises a trigger element 14 with a two-sided Zener characteristic. A capacitor 15 takes the place of the aforesaid resistor 12.

Claim:


Circuit allowing only one of a number of telephone sets, which are multiple-connected to a subscriber's line, to get, at one time, into the conversation or signalling state, and comprising in each of the telephone sets:
- a supply circuit for the equipment in the telephone set or coupled to it;
- switching means for switching the equipment that follows into the conversation or signalling state, and
- a control circuit for controlling the switching means dependent on the voltage across the subscriber's line,
characterized in that the supply circuit and the switching means have at least one semiconductor element in common.

FIG. 1

FIG. 2

FIG. 3

**FIG. 4**

**FIG. 5**

**FIG. 6**

# 0009293

European Patent
Office

**EUROPEAN SEARCH REPORT**

Application number

EP 79 20 0527

| | DOCUMENTS CONSIDERED TO BE RELEVANT | | CLASSIFICATION OF THE APPLICATION (Int. Cl. |
|---|---|---|---|
| Category | Citation of document with indication, where appropriate, of relevant passages | Relevant to claim | |
| | | | H 04 M 1/70 |
| X | US - A - 3 514 544 (CHAMBERS) <br> * Column 4, line 72 - column 5, line 57; figures * | 1 | |
| X | US - A - 3 499 121 (McINTOSH) <br> * Column 2, line 21 - column 3, line 54; figure 1 * | 1 | |
| | US - A - 4 039 759 (TAYLOR) <br> * Column 3, line 33 - column 4, line 11; figure * | 1 | TECHNICAL FIELDS SEARCHED (Int.Cl.) <br><br> H 04 M 1/70 <br> H 04 Q 5/02 <br> 5/00 |

CATEGORY OF
CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family,
   corresponding document

The present search report has been drawn up for all claims

| Place of search | Date of completion of the search | Examiner |
|---|---|---|
| The Hague | 01-11-1979 | KEPPENS |

EPO Form 1503.1  06.78